# NEW EUROPEAN PATENT SPECIFICATION

(11) **EP 0 645 349 B2**
(45) Date of publication and mention of the opposition decision: **01.12.1999**
(45) Mention of the grant of the patent: 19.06.1996
(21) Application number: 93115681.4
(22) Date of filing: 29.09.1993
(51) Int. Cl.: C03C 3/112

(54) **Low refractive optical glass of a flint glass type**
Niedrigbrechendes optisches Glas des Flintglastyps
Verre optique à basse refractivité du type verre "flint"

(43) Date of publication of application: 29.03.1995
(73) Proprietor: KABUSHIKI KAISHA OHARA, Kanagawa-ken (JP)
(72) Inventor: Enomoto, Goro, Sagamihara-shi, Kanagawa-ken (JP)
(74) Representative: Jönsson, Hans-Peter, Dr.Dipl.-Chem.

(56) References cited:
- EP-A- 0 564 802
- JP-A- 1 133 956
- JP-A- 5 225 812
- JP-A- 5 846 459
- US-A- 4 084 978
- JOURNAL OF NON-CRYSTALLINE SOLIDS. vol. 129, no. 1-3 , 2 March 1991 , AMSTERDAM NL pages 54 - 63 XP305992 B.SAMUNEVA ET AL. 'Structure and Optical Properties of Niobium Silicate Glasses.'
- DATABASE WPI Section Ch, Week 8850, Derwent Publications Ltd., London, GB; Class L, AN 88-356301 & JP-A-63 265 840 (OHARA KK) 2 November 1988

## Description

This invention relates to a low refractive flint glass type optical glass of a SiO₂ - Nb₂O₅ - TiO₂ - R'₂O - F (where R' is an alkali metal element) having optical constants of a refractive index (Nd) of about 1.60 or below and an Abbe number (νd) of about 57 - 40.

Known in the art are a variety of glasses having these optical constants. These glasses are of a relatively low refractive and low dispersion property in the property region of flint glasses and have been produced mostly as a SiO₂ - PbO system glass. These glasses, however, have a serious drawback of containing a toxic PbO ingredient. For overcoming this drawback, the specification of USP 3,877,953 discloses a SiO₂ - B₂O₃ - Nb₂O₅ - K₂O system glass and the specification of USP 4,719,186 disclose a SiO₂ - B₂O₃ - TiO₂ - R'₂O system glass.

Journal of Non-Crystalline Solids, Vol. 129, No. 1 to 3, 1991, pages 54 to 63 describes an optical glass consisting of KF, Nb₂O₅ and SiO₂.

EP 0 564 802 A2 discloses a glass being free of Pb and Ba having a high light transmission. Said publication published on 13 October 1993 discloses the presence of a minimum amount of CaO being 3 % by weight.

JP-01133956-A discloses a glass composition for grated index type lens which is obtained by replacing a part of O²⁻ -ion in a glass composition by 1 to 20 mol.-% of F⁻ -ion. The glass composition comprises by mol.-% 40 to 65 SiO₂, 0 to 20 B₂O₃, 10 to 25 Al₂O₃, 0 to 25 Li₂O, 0 to 20 Na₂O, 0 to 20 K₂O, 0 to 25 Cs₂O, 0 to 25 TiO₂, 8 to 35 Li₂O + Na₂O + K2O + Cs₂O + TiO₂, 0 to 25 TiO₂, 0 to 10 ZrO₂, 0 to 20 GeO₂, 0 to 20 MgO, 0 to 10 CaO, 0 to 10 SrO, 0 to BaO, 0 to 10 SnO₂, 0 to 15 PbO, 0 to 15 Ta₂O5, 0 to 10 Nb₂O5 0 to 2 As₂O3 and 0 to 2 Sb₂O₃.

JP-52-25812 discloses a low density optical flint glass. The glass contains SiO₂ (partially replaceable with B₂O₃) 10 to 60 % by weight, Nb₂O₅ (partially replaceable with Ta₂O₅) 5 to 60 % by weight, TiO₂ 0,5 to 50 % by weight, alkali metal oxides 5 to 50 %, ZrO₂ < 20 %, alkaline earth metal < 30 %, Al₂O₃ < 10 % and Nb₂O₅ + TiO₂ 10 to 70 % by weight. The refractive index Nd is 1,61 to 1,80. The Abbé number νd is 38 to 25.

JP-58-46459 discloses a low density of optical flint glass compositions containing oxides of silicone, niobium, barium, sodium, potassium and titanium. The glass comprises (in weight %) 10 to 60 SiO₂, 5 to 60 Nb₂O₅, 5 to 40 R₂O, 5 to 40 RO, 0 to 20 La₃P₃, 0 to 20 ZrO₂, 0 to 20 TiO₂, 0 to 10 Al₂O₃, where SiO₂ can be partially substituted with B₂O₃ and Sn₂O₅ can be partially substituted with Ta₂O₅. the low density optical glass has a high quality refractive index 1.61 to 1.8 nd and 43 to 28 νd.

DE 973 350 discloses optical silicate glasses having a low refractive index.

JP-A-63 265 840 (as interpreted by the Derwent Abstract. No. 88-356301) describes an optical glass having a refractive index of 1.59 to 1.82, Abbe's No. of 20 to 40 and exhibiting excellent light transparency with the composition, comprising 5 to 55 % SiO₂, 1 to 50 % Nb₂O₅, 17.5 to 30 % alkali metal oxides and 0 to 10% fluorides (s). Further, 0.5 to 15 % B₂O₃ and 0.5 to 30 % P₂O₅ are present.

The proposed glasses having the above described optical constants, however, have the disadvantage that they are inferior in light transmissivity.

It is therefore an object of the present invention to eliminate the above described disadvantages of the prior art glasses and provide an optical glass which has optical constants of a refractive index (Nd) of 1.60 or below and an Abbe number (νd) of 57 to 40 and has improved light transmissivity.

Accumulated studies and experiments made by the inventor of the present invention for achieving the above described object of the invention have resulted in a finding, which has led to the present invention, that a stable glass can be obtained in a novel SiO₂ - Nb₂O₅ - TiO₂ - R'₂O - F system glass which is substantially free of B₂O₃ and that a PbO-tree optical glass which has the above described desired optical constants and is improved in light transmissivity can thereby be obtained.

The optical glass of a flint glass type achieving the above described object of the invention is characterized in that the glass being substantially free of PbO consists of in weight percent:

| | |
|---|---|
| SiO₂ | 45 - 70 % |
| Al₂O₃ | 0 - 20 % |
| Nb₂O₅ + TiO₂ | 0.5 - 17 % |
| in Nb₂O₅ | 0.5 - 2 % |
| TiO₂ | up to 15 % |
| ZrO₂ | 0 - 10 % |
| Li₂O + Na₂O + K₂O | 15 - 40 % |
| in which Li₂O | 0 - 20 % |
| Na₂O | 0 - 40 % |
| K₂O | 0 - 40 % |
| CaO | less than 3 % |
| ZnO + MgO + CaO + SrO + BaO | 0 - 10 % |
| in which BaO | 0 - 5 % |
| and a fluoride of a metal element or elements contained in the above metal oxides, a total amount of F contained in the fluoride or fluorides | 0.1 - 8 % |

having a refractive index Nd of 1.60 or below and an Abbé number (νd) of 57 to 40 and having a wavelength of light producing light transmissivity of 5 % at a thickness of 10 mm being 330 nm or less and a wavelength of light producing light transmissivity of 80 % at a thickness of 10 mm being 360 nm or less.

In the optical glass made according to the invention, the above described content ranges of the respective ingredients have been selected for the reasons stated below. In the following description, the content range of the respective ingredients are expressed in weight percent.

The amount of SiO₂ which is a principal glass forming ingredient should be within the range of 45 - 70% for chemical durability and melting property of the glass. The Al₂O₃ ingredient may be added for adjusting optical constants and improving stability of the glass. If the amount of this ingredient exceeds 20%, the melting property decreases with resulting difficulty in obtaining a homogeneous glass. The Nb₂O₅ ingredient is the most important ingredient for imparting desired optical constants to the glass of the

present invention and besides is effective for improving chemical durability of the glass. For obtaining the expected results, it is necessary to add 0.5% or more Nb₂O₅. The TiO₂ ingredient has the same effect as the Nb₂O₅ ingredient, and is present in an amount up to 15% because, if the amount exceeds 15%, the glass tends to become tinted, The total maximum amount of the Nb₂O₅ and TiO₂ ingredients, should be 17% for preventing the glass from being tinted. For improving the chemical durability of the glass, the ZrO₂ ingredient may be added up to 10% which is a limit at which significant devitrification can be prevented.

The ingredients Li₂O, Na₂O and K₂O are effective for increasing the melting property of the glass and the ingredients Na₂O and K₂O are effective for lowering the refractive index, so that one or more of these ingredients should be added to the glass. For maintaining the chemical durability, the addition of these ingredients should be respectively up to 20%, 40% and 40% and a total amount of one or more of these ingredients should be within the range of 15 - 40%.

The ZnO, MgO, SrO and BaO ingredients are effective for improving the melting property of the glass and one or more of these ingredients may be added. A total amount of one or more of these ingredients should be up to 10% for maintaining the target optical constants. For the same reason, the amount of the BaO ingredients should be up to 5%.

The fluorine (F) ingredient is an important ingredient for lowering the refractive index and improving light transmissivity of the glass. For achieving these effects, it is necessary to add 0.1% or more fluorine. The addition of fluorine, however, should not exceed 8% because otherwise striae would be produced in the glass and the quality of the glass would thereby be deteriorated.

As a defoaming agent, Sb₂O₃ or other known defoaming agent in the amount not exceeding 1% may be added to the glass of the present invention.

Table 1 shows examples of compositions (No. 1 - No. 9), a reference example and comparative examples (No. A and No. B) of the prior art optical glasses as well as the refractive index (Nd), Abbe number (νd) and wavelengths of light in the unit of 10 nm producing light transmissivity of 80% and 5% in a specimen with two polished surfaces having thickness of 10 mm, i.e., T₈₀/T₅ (10nm) These glasses were obtained by preparing and mixing selected raw materials such as oxides, carbonates, nitrates and fluorides and melting the mixture of the raw materials in a platinum crucible, stirring the mixture to homogenize it, casting it in a mold and annealing it.

In Table 1, the examples of the optical glasses according to the present invention all exhibit optical constants within the predetermined region and smaller values of T₈₀ and T₅ than the glasses of the comparative examples having equivalent optical constants, which indicates that the wavelength of light is Shifted substantially toward the short wavelength side, so that light transmissivity is remarkably improved. Moreover, the glasses of the examples of the present invention have good chemical durability. Furthermore, these glasses have excellent melting property and property against devitrification and have a low softening temperature and, accordingly, are easy to manufacture.

| | **Examples** | | | | | **Comparative Examples** | |
|---|---|---|---|---|---|---|---|
| No. | 1 | 2 | 3 | 4 | 5 | A | B |
| SlO₂ | 60.8 | 48.0 | 51.3 | 57.0 | 59.0 | 28.5 | 60.0 |
| B₂O₃ | | | | | | 10.5 | 6.6 |
| Al₂O₃ | | 5.0 | | | | | 1.7 |
| Nb₂O₅ | 2.0 | 1.0 | 2.0 | 1.0 | 2.0 | 10.0 | |
| TiO₂ | 9.5 | 5.0 | 12.2 | 5.0 | 14.0 | | 9.9 |
| ZrO2 | | | | | | | 0.5 |
| ZnO | 2.5 | | | | | | |
| MgO | | | | | | | 0.2 |
| CaO | | | | | | | |
| SrO | | | | | 5.0 | | |
| BaO | 2.5 | | | | | | |
| Li₂O | 5.0 | | | | 8.0 | | 8.0 |
| Na₂O | 7.5 | 36.0 | 10.0 | | 5.0 | | 5.6 |
| K₂O | 7.5 | | 17.0 | 36.0 | 3.0 | 21.0 | 7.0 |
| AlF₃ | | 5.0 | | | | | |
| Ti₂F₆ | | | | | | 30.0 | |
| NaF | | | | | | | 0.5 |
| KF | 2.5 | | 7.5 | 1.0 | 4.0 | | |
| (F) | (0.8) | (3.4) | (2.4) | (0.3) | (1.3) | (15.5) | (0.2) |
| Sb₂O₃ | 0.2 | | 0.2 | | | | |
| ηd | 1.5714 | 1.5236 | 1.5534 | 1.5260 | 1.5970 | 1.5886 | 1.5789 |
| νd | 45.5 | 49.1 | 44.5 | 52.7 | 40.9 | 39.2 | 46.4 |
| T₈₀/T₅ (10nm) | 35/33 | 35/33 | 35/33 | 34/32 | 36/33 | 37/34 | 38/35 |

## Claims

1. A low refractive optical glass of a flint glass type being substantially free of PbO and consisting of in weight percent
| | |
|---|---|
| SiO₂ | 45 - 70 % |
| Al₂O₃ | 0 - 20 % |
| Nb₂O₅ + TiO₂ | 0.5 - 17 % |
| in Nb₂O₅ | 0.5 - 2 % |
| TiO₂ | up to 15 % |
| ZrO₂ | 0 - 10 % |
| Li₂O + Na₂O + K₂O | 15 - 40 % |
| in which Li₂O | 0 - 20 % |
| Na₂O | 0 - 40 % |
| K₂O | 0 - 40 % |
| CaO | less than 3 % |
| ZnO + MgO + CaO + SrO + BaO | 0 - 10 % |
| in which BaO | 0 - 5 % |
| and a fluoride of a metal element or elements contained in the above metal oxides, a total amount of F contained in the fluoride or fluorides | 0.1 - 8 % |
having a refractive index Nd of 1.60 or below and an Abbé number (νd) of 57 to 40 and having a wavelength of light producing light transmissivity of 5 % at a thickness of 10 mm being 330 nm or less and a wavelength of light producing light transmissivity of 80 % at a thickness of 10 mm being 360 nm or less.

## Patentansprüche

1. Niedrigbrechendes optisches Glas vom Flintglastyp, das im wesentlichen Pb-frei ist, bestehend in Gew.-% aus:
| | |
|---|---|
| SiO₂ | 45-70 % |
| Al₂O₃ | 0-20 % |
| Nb₂O₅ + TiO₂ | 0,5-17 % worin |
| Nb₂O₅ | 0,5-2 % |
| TiO₂ | bis zu 15 % ist, |
| ZrO₂ | 0-10 % |
| Li₂O + Na₂O + K₂O | 15-40 %, worin |
| Li₂O | 0-20 % |
| Na₂O | 0-40 % |
| K₂O | 0-40 % ist, |
| CaO | weniger als 3 % |
| ZnO + MgO + CaO + SrO + BaO | 0-10 %, worin |
| BaO | 0-5 % ist, |
| und einem Fluorid eines Metallelements oder von Metallelementen, das (die) in den obigen Metalloxiden enthalten ist (sind), wobei eine Gesamtmenge von F in dem Fluorid oder Fluoriden von | 0,1-8 % |
| enthalten ist, | |
welches einen Brechungsindex Nd von 1,60 oder weniger und eine Abbésche-Zahl (νd) von 57 bis 40 hat und eine Lichtdurchlässigkeit von 5 % bei einer Dicke von 10 mm und einer Wellenlänge von 330 nm oder weniger und eine Lichtdurchlässigkeit von 80 % bei einer Dicke von 10 mm und einer Wellenlänge von 360 nm oder weniger aufweist.

## Revendications

1. Un verre optique à faible indice de réfraction de type verre flint essentiellement exempt de PbO, et comprenant en pourcentage en poids :
| | |
|---|---|
| SiO₂ | 45 -70 % |
| Al₂O₃ | 0 - 20 % |
| Nb₂O₅ + TiO₂ | 0,5 - 17 % |
| où Nb₂O₅ représente | 0,5 - 2 % |
| TiO₂ représente | jusqu'à 15 % |
| ZrO₂ | 0 - 10 % |
| Li₂O + Na₂O + K₂O | 15 - 40 % |
| où Li₂O représente | 0 - 20 % |
| Na₂O représente | 0 - 40 % |
| K₂O représente | 0 - 40 % |
| CaO | moins de 3 % |
| ZnO + MgO + CaO + SrO + BaO | 0 - 10 % |
| où BaO représente | 0 - 5 % |
| et un fluorure d'un métal ou de métaux contenus dans les oxydes de métaux ci-dessus, la quantité totale de F contenue dans le ou les fluorures étant : | 0,1 - 8 % |
ayant un indice de réfraction Nd de 1,60 ou moins et un nombre d'Abbe (νd) de 57 à 40 et ayant une longueur d'onde de lumière produisant une transmissibilité de lumière de 5 % à une épaisseur de 10 mm de 330 nm ou moins et une longueur d'onde de lumière produisant une transmissibilité de lumière de 80 % à une épaisseur de 10 mm de 360 nm ou moins.
